# EUROPÄISCHE PATENTSCHRIFT

(11) **EP 0 611 903 B1**
(45) Veröffentlichungstag und Bekanntmachung des Hinweises auf die Patenterteilung: **09.04.1997**
(21) Anmeldenummer: 94101333.6
(22) Anmeldetag: 29.01.1994
(51) Int. Cl.: F16H 59/10, B60K 20/04

(54) **Wählhebelanordnung für ein automatisches Getriebe eines Kraftfahrzeuges**
Selector lever for an automatic gearbox of a motor vehicle
Levier de sélection pour une transmission automatique de véhicule à moteur

(30) Priorität: 18.02.1993 DE 4305015
(43) Veröffentlichungstag der Anmeldung: 24.08.1994
(73) Patentinhaber: FORD-WERKE AKTIENGESELLSCHAFT, 50735 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: DeCrouppe, Guido, D-50169 Kerpen (DE); Turner, Graeme, D-53804 Much (DE)
(74) Vertreter: Messulam, Alec Moses

(56) Entgegenhaltungen:
- EP-A- 0 414 603
- EP-A- 0 437 150
- EP-B- 0 279 087
- DE-C- 649 573
- DE-C- 1 963 545
- US-A- 1 671 339
- US-A- 4 732 232

## Beschreibung

Die Erfindung bezieht sich auf eine Wählhebelanordnung für ein automatisches Getriebe eines Kraftfahrzeuges der im Oberbegriff des Patentanspruches 1 erläuterten Art.

Aus der DE-C 1 963 545 ist eine Wählhebelanordnung für ein automatisches Getriebe eines Kraftfahrzeuges der eingangs erläuterten Art bekannt.

Bei einer solchen Wählhebelanordnung für ein Kraftfahrzeug mit einem Standard-Antriebsstrang, d.h. mit einem vorne längs eingebauten Verbrennungsmotor und mit einem sich anschließenden automatischen Getriebe, das über eine Kardanwelle auf ein Differentialgetriebe wirkt, von dem aus über Antriebswellen die Hinterräder des Kraftfahrzeuges angetrieben werden, besteht das Verbindungsbauteil aus einem sich von der horizontalen Querachse nach unten erstreckenden Hebelarm, von dem eine Gestängeverbindung zu dem Eingangs-Schaltelement am automatischen Getriebe führt.

Bei dieser bekannten Wählhebelanordnung ergibt eine nach rückwärts gerichtete Wählbewegung am Wählhebel eine nach vorn gerichtete Wählbewegung am Verbindungsbauteil, die auf das zumeist vor der Wählhebelanordnung liegende Eingangs-Schaltelement des automatischen Getriebes übertragen wird. Die Gestängeverbindung liegt hierbei im Bereich des Mitteltunnels des Kraftfahrzeuges unterhalb des Fahrzeugbodens.

Aus der EP-B 0 279 087 ist eine Wählhebelanordnung für ein automatisches Getriebe eines Kraftfahrzeuges bekannt, wie sie in letzter Zeit in zunehmendem Maße zur Anwendung gelangt ist, wenn ein Kraftfahrzeug mit einer Frontantriebsanordnung ausgestattet ist, d.h., wenn einem vorn quer angeordneten Verbrennungsmotor ein automatisches Getriebe ebenfalls querliegend nachgeschaltet ist. Hierbei ist das automatische Getriebe zumeist unterhalb oder unterhalb und hinter dem Verbrennungsmotor angeordnet, und über ein meist im Getriebe- gehäuse integriertes Differentialgetriebe werden über Antriebsachsen die Vorderräder des Kraftfahrzeuges angetrieben.

Bei der vorstehenden Frontantriebsanordnung hat es sich ergeben, daß die bei einer bisher üblichen Wählhebelanordnung sich ergebenden Bewegungsrichtungen zu Verlegungen für die Bowdenzugverbindung zum Eingangs-Schaltelement des Getriebes führen. Deshalb wird das Verbindungsbauteil mit dem Lagerungsbauteil derart verbunden oder ist mit diesen einstückig zusammengefaßt, daß der Anschluß der Gestänge-Bowdenzug-Verbindung oberhalb der horizontalen Querachse des Wählhebels angreift, wodurch die Wählbewegungen des Wählhebels ohne Umkehr der Bewegungsrichtung weitergegeben werden.

Bei dieser bekannten Wählhebelanordnung liegt die Gestänge-Bowdenzug-Verbindung oberhalb des Fahrzeugbodens und dementsprechend muß ein gesonderter Durchtritt durch die Spritzwand des Kraftfahrzeuges vorgesehen werden. Dadurch wird die Verlegung dieses Verbindungsgestänges und des Verbindungsbowdenzuges aufwendiger und die bei der Endmontage übliche vertikale Zusammenführung von Karosserie- und Antriebsstrang kann schwieriger werden.

Es ist weiterhin bekannt, einen Kegelradtrieb (US-A 4 732 232) als Koppelung zwischen einem Lagerungsbauteil und einem Bowdenzug oder Zahnsegmente (DE-C 649 573) als Koppelung zwischen einem Lagerungsbauteil und einer Verbindungsstange zu benutzen.

Die Aufgabe der Erfindung ist es daher, eine Wählhebelanordnung für ein automatisches Getriebe eines Kraftfahrzeuges der im Oberbegriff des Patentanspruches 1 erläuterten Art derart weiterzubilden, daß eine Umkehrung der Bewegungsrichtung der Wählbewegungen vermieden wird und dennoch die Verlegung der erforderlichen Bowdenzugverbindung zum Eingangs-Schaltelement des Getriebes unterhalb des Fahrzeugbodens erfolgen kann.

Diese Aufgabe wird durch die im Anspruch 1 aufgeführten Merkmale gelöst. In den Ansprüchen 2 und 3 sind zweckmäßige Ausgestaltungen der Erfindung erläutert.

Die Erfindung wird anhand eines in den Figuren dargestellten Ausführungsbeispieles näher erläutert. Es zeigt:

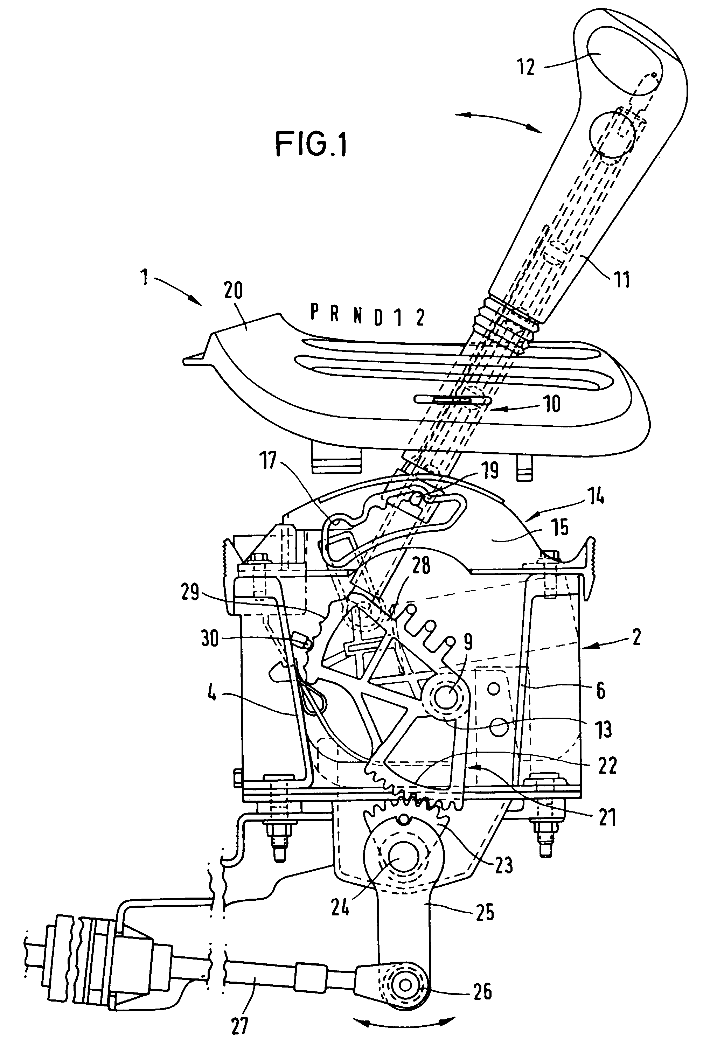

Fig. 1 eine vertikale Seitenansicht einer Wählhebel anordnung gemäß der Erfindung, in der durch Weglassen von Teilen der Seitenwand 3 die erfindungswesentlichen Bauteile hervorgehoben sind und

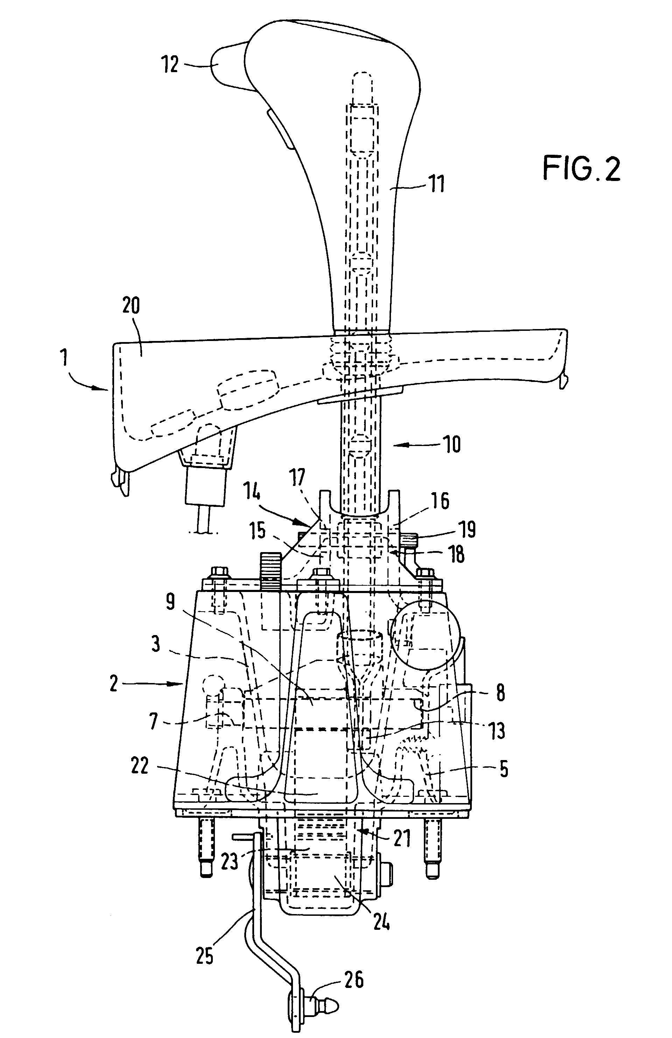

Fig. 2 eine vertikale Rückansicht der Wählhebelanordnung in Fig. 1 mit den erfindungswesentlichen Bauteilen.

Eine Wählhebelanordnung 1 für ein automatisches Getriebe eines Kraftfahrzeuges besteht im wesentlichen aus einem am Fahrzeugboden (nicht gezeigt) befestigbaren Wählhebelgehäuse 2, das früher aus einem Blech- oder Spritzgußgehäuse aus Metall bestand, das jedoch heute zumeist aus einem entsprechenden hochwertigen Kunststoffmaterial im Spritzguß hergestellt wird. Das domartige Wählhebelgehäuse 2 weist etwa vertikale Seitenwände 3, 4, 5 und 6 auf, von denen die beiden seitlichen Seitenwände 3 und 5 Lageröffnungen 7 und 8 für eine horizontale Querachse 9 aufweisen.

Ein Wählhebel 10 weist oben einen Handgriff 11 mit einem Kontrollknopf 12 auf und ist unten mit einem Lagerungsbauteil 13 verbunden, mittels dem er auf der horizontalen Querachse 9 schwenkbar gelagert ist.

Das domartige Wählhebelgehäuse 2 ist oben von einem parallelwandigen Rastenbauteil 14 überdeckt, in dessen Seitenwänden 15 und 16 Rastkulissen 17 und 18 angeordnet sind, die mit einer Rastvorrichtung in Form eines horizontalen Rastbolzens 19 zusammenwirken, der über eine entsprechende Verbindung (nur in gestrichelten Linien angedeutet) vom Kontrollknopf 12 her beeinflußbar ist.

Die Wählhebelanordnung wird zum Fahrzeuginnenraum hin durch eine eine Kulissenführung aufweisende Abdeckblende 20 in stilistisch gefälliger Weise abgedeckt.

Soweit die Wählhebelanordnung bisher beschrieben wurde, entspricht sie im wesentlichen einem herkömmlichen Aufbau, wobei das Lagerungsbauteil 13 sowohl sich oberhalb der horizontalen Querachse 9 als auch unterhalb erstreckende Arme aufweisen kann, die zum Anschluß der Bowdenzugverbindung herangezogen werden können, wobei je nachdem ob die Bowdenzuganordnung oberhalb oder unterhalb der horizontalen Querachse 9 angeordnet wird, keine oder aber eine Umlenkung der Wählbewegungsrichtung auftritt.

Eine solche unmittelbare Anlenkung der Bowdenzuganordnung an das Lagerungsbauteil 13 weist noch den Nachteil auf, daß je nach Anlenkungspunkt keine eindeutige Linearität zwischen der Wählbewegung am Wählhebel und der Bewegung am entsprechenden Verbindungsbauteil auftritt.

Gemäß der Erfindung ist daher der Lagerungsbauteil 13 mit einer besonderen Verbindungsanordnung 21 verbunden.

Die Verbindungsanordnung 21 besteht aus einem sich nach unterhalb der horizontalen Querachse 9 erstreckenden ersten Zahnsegment 22, das in Eingriff mit einem zweiten Zahnsegment 23 steht, das auf einer unteren horizontalen Querachse 24 angeordnet ist, die in Teilbereichen der sich nach unten erstreckenden Seitenwände 3 und 5 des Wählhebelgehäuses 2 schwenkbar aufgenommen ist. An der unteren horizontalen Querachse 24 ist drehfest ein Hebelarm 25 angeordnet, an dessem unteren Ende 26 die Bowdenzugverbindung 27 zum automatischen Getriebe angelenkt ist.

Das Lagerungsbauteil 13, das den Wählhebel 10 aufnimmt, kann hierbei als unabhängiges Kunststoff- oder Spritzgußbauteil ausgebildet sein, das auf der horizontalen Querachse 9 schwenkbar gelagert ist und drehfest mit einem benachbarten Verbindungsbauteil verbunden ist oder aber das Lagerungsbauteil 13 und das Verbindungsbauteil können, wie hier gezeigt, als ein einstückiges Bauteil aus Kunststoff-Spritzguß hergestellt sein.

In ähnlicher Weise kann das untere Zahnsegment 23 drehfest mit der unteren Querachse 24 verbunden sein und den gleichfalls drehfest mit der Querachse 24 verbundenen Hebelarm 25 antreiben. Es ist jedoch auch möglich, das untere Zahnsegment 23 mit dem Hebelarm 25 als ein einstückiges Kunststoffbauteil zusammenzufassen.

Durch die Ausbildung der Verbindungsanordnung in Form zweier in Eingriff miteinander stehender Zahnsegmente kann die Anordnung des Hebelarmes 25 unabhängig von der geneigten Lage des Wählhebels 10 in einer optimalen senkrechten Lage erfolgen, so daß die entsprechenden Wählbewegungen mit einer weitgehend linearen Funktion über die Bowdenzugverbindung an das Eingangs-Schaltelement des automatischen Getriebes weitergegeben werden.

An dem Verbindungsbauteil ist vorzugsweise noch ein sich nach oben erstreckendes Nockensegment 28 mit einer Anzahl von Rasten 29 vorgesehen, die mit einer Feder/Kugel-Raste 30 an der vorderen Seitenwand 4 des Wählhebelgehäuses 2 zusammenwirken, um die Wählhebelpositionen genauer festzulegen.

## Patentansprüche

1. Wählhebelanordnung für ein automatisches Getriebe eines Kraftfahrzeuges,
- mit einem in einem am Fahrzeugboden angeordneten Wählhebelgehäuse (2),
- mit einem um eine horizontale Querachse (9) schwenkbaren Wählhebel (10),
- das Wählhebelgehäuse (2) ist domartig mit Seitenwänden (3 bis 6) u.a. zur Aufnahme der Querachse (9) ausgebildet und oben von einem parallelwandigen Rastenbauteil (14) und einer eine Kulisse aufweisenden Abdeckblende (20) überdeckt,
- der Wählhebel (10) weist oben einen Handgriff (11) mit einem Kontrollknopf (12) und im Bereich des Rastenbauteiles (14) eine über den Kontrollknopf (12) beeinflußbare Rastvorrichtung (19) und unten ein Lagerungsbauteil (13) auf, über das der Wählhebel (10) auf der Querachse (9) schwenkbar gelagert ist,
- und das Lagerungsbauteil (13) weist eine Verbindungsanordnung auf, die mit einem Verbindungsmittel (27) gekoppelt ist, das die Wählbewegung an ein Eingangs-Schaltelement des automatischen Getriebes weiterleitet,
**gekennzeichnet** durch die folgenden Merkmale:
- die Verbindungsanordnung (21) besteht aus einem sich nach unterhalb der Querachse (9) erstreckenden oberen Zahnsegment (22),
- ein unteres Zahnsegment (23) ist um eine untere horizontale Querachse (24) schwenkbar angeordnet und steht in Eingriff mit dem oberen Zahnsegment (22),
- ein Hebelarm (25) ist mit der unteren Querachse (24) drehfest verbunden, und
- am freien Ende (26) des Hebelarms (25) ist als Verbindungsmittel eine Bowdenzugverbindung (27) angelenkt.

2. Wählhebelanordnung nach Anspruch 1, **gekennzeichnet** durch die folgenden Merkmale:
- das Lagerungsbauteil (13) und das obere Zahnsegment (22) der Verbindungsanordnung (21) sind als ein einstückiges Kunststofformteil ausgebildet, und
- das untere Zahnsegment (23) und der Hebelarm (25) sind als einstückiges Kunststofformteil ausgebildet.

3. Wählhebelanordnung nach Anspruch 1 oder den Ansprüchen 1 und 2, **gekennzeichnet** durch die folgenden Merkmale:
- das obere Zahnsegment (22) ist mit einem sich nach oberhalb der horizontalen Querachse (9) erstreckenden Nockensegment (28) versehen, und
- das Nockensegment ist mit einer Vielzahl von Rasten (29) versehen, die in Wirkverbindung mit einer an der vorderen Seitenwand (4) des Wählhebelgehäuses (2) angeordneten Feder/Kugel-Raste (30) stehen.

## Claims

1. Selector lever arrangement for an automatic gearbox of a motor vehicle, comprising
- a selector lever housing (2) disposed on the vehicle floor and
- a selector lever (10) pivotable about a horizontal transverse axle (9),
wherein
- the selector lever housing (2) is dome-shaped with side walls (3 to 6) serving inter alia to receive the transverse axle (9) and is covered on top by a parallel-walled notched member (14) and a cover (20) with a gate,
- the selector lever (10) has at its top a hand grip (11) with a control knob (12), in the region of the catch member (14) a catch device (19) that can be operated by means of the control knob (12), and at the bottom a mounting member (13) by means of which the selector lever (10) is pivotally mounted on the transverse axle (9), and
- the mounting member (13) is provided with connecting means which is coupled with linkage means (27) which transfers the selection movement to a shift input element of the automatic gearbox,
characterised by the following features:
- the connecting means (21) comprises an upper toothed segment (22) extending beneath the transverse axle (9),
- a lower toothed segment (23) is pivotable about a lower horizontal transverse axle (24), and is in engagement with the upper toothed segment (22),
- a lever arm (25) is connected non-rotatably to the lower transverse axle (24), and
- a Bowden cable linkage (27) is linked to the free end (26) of the lever arm (25) as the linkage means.

2. Selector lever arrangement according to claim 1, characterised by the following features:
- the mounting member (13) and the upper toothed segment (22) of the connecting means (21) are in the form of an integrally moulded part of plastics material, and
- the lower toothed segment (23) and the lever arm (25) are in the form of an integrally moulded part of plastics material.

3. Selector lever arrangement according to claim 1 or claims 1 and 2,
characterised by the following features:
- the upper toothed segment (22) is provided with a cam segment (28) extending above the horizontal transverse axle (9), and
- the cam segment is provided with a plurality of notches (29) which cooperate with a spring-and-ball catch (30) arranged on the front side wall (4) of the selector lever housing (2).

## Revendications

1. Agencement de levier de sélection destiné à une boîte de vitesses automatique d'un véhicule automobile,
- comprenant un carter de levier de sélection (2) qui est disposé sur le plancher du véhicule,
- comprenant un levier de sélection (10) qui peut pivoter autour d'un axe transversal horizontal (9),
- le carter (2) du levier de sélection étant réalisé sous la forme d'un dôme qui est pourvu de parois latérales (3 à 6), notamment pour recevoir l'axe transversal (9), en étant recouvert à sa partie supérieure par un élément d'encliquetage (14) à parois parallèles et par un cache de recouvrement (20) qui présente une coulisse,
- le levier de sélection (10) présentant à sa partie supérieure une poignée (11) pourvue d'un bouton de commande (12) et, dans la région de l'élément d'encliquetage (14), un dispositif d'encliquetage (19) sur lequel on peut agir par l'intermédiaire du bouton de commande (12), et, à sa partie inférieure, un élément de palier (13) par l'intermédiaire duquel le levier de sélection (10) est monté pivotant sur l'axe transversal (9),
- et l'élément de palier (13) présentant un agencement de liaison accouplé à un moyen de liaison (27) qui transmet le déplacement de sélection à un élément de commutation d'entrée de la boîte de vitesses automatique,
caractérisé par les particularités suivantes :
- l'agencement de liaison (21) est constitué par un secteur denté supérieur (22) qui s'étend au-dessous de l'axe transversal (9),
- un secteur denté inférieur (23) est monté pivotant autour d'un axe transversal horizontal inférieur (24), et il engrène avec le secteur denté supérieur (22),
- un bras de levier (25) est relié à l'axe transversal inférieur (24) d'une manière solidaire en rotation, et :
- une liaison par câble sous gaine (27) servant de moyen de liaison est articulée sur l'extrémité libre (26) du bras de levier (25).

2. Agencement de levier de sélection selon la revendication 1, caractérisé par les particularités suivantes :
- l'élément de palier (13) et le secteur denté supérieur (22) de l'agencement de liaison (21) sont réalisés sous la forme d'une pièce moulée en matière plastique d'un seul tenant, et :
- le secteur denté inférieur (23) et le bras de levier (25) sont réalisés sous la forme d'une pièce moulée en matière plastique d'un seul tenant.

3. Agencement de levier de sélection selon la revendication ou les revendications et 2, caractérisé par les particularités suivantes :
- le secteur denté supérieur (22) est pourvu d'un secteur à encoches (28) qui s'étend au-dessus de l'axe transversal horizontal (9), et :
- le secteur à encoches est pourvu d'une pluralité d'encoches d'encliquetage (29) qui sont reliées fonctionnellement à un cliquet à ressort et à bille (30) disposé sur la paroi latérale avant (4) du carter (2) du levier de sélection.
